# EUROPÄISCHE PATENTANMELDUNG

(11) **EP 4 040 623 A1**
(43) Veröffentlichungstag der Anmeldung: **10.08.2022**
(21) Anmeldenummer: 21155140.3
(22) Anmeldetag: 04.02.2021
(51) Int. Cl.: H02J 7/00, H01M 50/20, H01M 10/00, B60L 50/60

(54) **MODULARES BATTERIESPEICHERSYSTEM MIT WIEDERAUFLADBAREN ENERGIESPEICHERMODULEN UND VERFAHREN ZUM BETREIBEN DES BATTERIESPEICHERSYSTEMS**

(71) Anmelder: VARTA Microbattery GmbH, 73479 Ellwangen Jagst (DE)
(72) Erfinder: Kloos, Dieter, 74579 Fichtenau (DE)
(74) Vertreter: Ostertag & Partner Patentanwälte mbB

(57) **Zusammenfassung**

Bei einem modularen Batteriespeichersystem (100) mit einer Gruppe aus *n* wiederaufladbaren Energiespeichermodulen (110) umfassen die Energiespeichermodule (110) jeweils mindestens ein, vorzugsweise mehrere wiederaufladbare Energiespeicherelemente. Jedem einzelnen der *n* Energiespeichermodule (110) ist ein Schalter (120) zugeordnet, über den das jeweilige Energiespeichermodul (110) aktiviert und deaktiviert werden kann. Die *n* Energiespeichermodule (110) sind über die Schalter (120) derart miteinanderverschaltbar, dass sich die Einzelspannungen *U_{Einzel}* von aktivierten Energiespeichermodulen zu einer Gesamtspannung *U_{Gesamt}* addieren können. Das Batteriespeichersystem (100) umfasst weiterhin eine Steuereinrichtung (130) zur Ansteuerung der den *n* Energiespeichermodulen (110) zugeordneten Schalter (120). Erfindungsgemäß umfasst das Batteriespeichersystem eine Modulationseinheit (200). Die Modulationseinheit (200) ist derart mit den verschaltbaren *n* Energiespeichermodulen (110) verbunden, dass sie die Gesamtspannung *U_{Gesamt}* zu modulieren vermag. Sie umfasst einen Pulsweitenmodulationsschalter (210) und ein Gehäuse (240), das den Pulsweitenmodulationsschalter (210) umschließt und das dazu ausgebildet ist, elektronische Komponenten außerhalb des Gehäuses (240) gegen von dem Pulsweitenmodulationsschalter (210) ausgehende elektromagnetische Störausstrahlung (280) abzuschirmen.

## Beschreibung

Die vorliegende Erfindung betrifft ein modulares Batteriespeichersystem mit einer Gruppe von *n* wiederaufladbaren Energiespeichermodulen sowie ein Verfahren zum Betreiben eines solchen modularen Batteriespeichersystems.

### ANWENDUNGSGEBIET UND STAND DER TECHNIK

Ein modulares Batteriespeichersystem umfasst eine Gruppe aus *n* Energiespeichermodulen, wobei *n* mindestens 2 ist. Die Energiespeichermodule sind wiederaufladbar ausgebildet. Innerhalb eines Batteriespeichersystems sind die Energiespeichermodule in aller Regel durch parallele und/oder serielle Verschaltung miteinander verbunden. Die Energiespeichermodule können jeweils einzelne elektrochemische Zellen umfassen oder aber auch Verbünde aus zwei oder mehr solcher Zellen. Innerhalb eines solchen Verbunds können einzelne elektrochemische Zellen wiederum durch parallele und/oder serielle Verschaltung miteinander verbunden sein.

Solche Batteriespeichersysteme werden meist als Gleichstromquelle verwendet. Mit Hilfe eines Multilevel-Umrichters können Batteriespeichersysteme aber auch an ein Wechselstromnetz angeschlossen werden. Bei solchen Umrichtern werden die Spannungen einzelner Energiespeichermodule zeitversetzt für unterschiedlich lange Zeiträume addiert. Wenn die Spannungen der einzelnen Energiespeichermodule im Verhältnis zur addierten Gesamtspannung ausreichend klein sind, lassen sich z.B. sinusförmige Spannungsverläufe in guter Näherung erzeugen.

Aus der WO 2018/162122 A1 ist ein modulares Batteriespeichersystem bekannt, bei dem den einzelnen Energiespeichermodulen jeweils ein Schalter zugeordnet ist, über den das jeweilige Energiespeichermodul aktiviert und deaktiviert werden kann. Dabei sind die Energiespeichermodule derart miteinander verschaltbar, dass sich die Einzelspannungen von aktivierten Energiespeichermodulen zu einer Gesamtspannung addieren können. Hierbei wird für jedes der Energiespeichermodule mindestens ein Leistungswert ermittelt und es wird eine sich zeitlich ändernde Gesamtspannung erzeugt, indem mindestens zwei Energiespeichermodule zeitlich überlappend, aber über unterschiedlich lange Aktivierungszeiträume aktiviert werden. In Abhängigkeit des jeweiligen Leistungswerts werden den einzelnen Energiespeichermodulen unterschiedlich lange Aktivierungszeiträume zugeordnet, so dass auch Energiespeichermodule unterschiedlichen Typs gut in das System eingebunden werden können.

Bei derartigen modularen Batteriespeichersystem kann durch sukzessive Verschaltung der Energiespeichermodule die Gesamtspannung stufenweise erhöht und erniedrigt werden, so dass im Ergebnis eine sogenannte Treppenspannung, die sich an eine sinusförmige Halbwelle annähert, erzeugt werden kann. Im Prinzip lassen sich durch geeignetesZu- und Abschalten dereinzelnen Energiespeichermodule zu den richtigen Zeitpunkten beliebige Kurvenformen generieren.

Über das Zu- und Abschalten bzw. Aktivieren und Deaktivieren der Energiespeichermodule ist jedoch nur eine grobe Annäherung an die gewünschte Ausgangsspannung möglich. Für eine weitere Angleichung der durch geeignete Schaltung der Energiespeichermodule erreichbaren gestuften Spannung ist es daher bereits bekannt, eine Pulsweitenmodulation (PWM) bei den einzelnen erzeugten Spannungen vorzugnehmen. So beschreibt bereits die erwähnte WO 2018/162122 A1, dass jeder Schalter, der den einzelnen Energiespeichermodulen zugeordnet ist, dazu ausgebildet ist, eine solche Pulsweitenmodulation durchzuführen. Die derart modifizierten Einzelspannungen können dann zu einer Gesamtspannung aufaddiert werden, die somit der gewünschten sinusförmigen Welle derSpannungweiterangenähert ist.

Für die Durchführung einer Pulsweitenmodulation sind in der Regel hohe Frequenzen erforderlich. Hieraus ergibt sich jedoch das Problem, dass sich die hohen Frequenzen nachteilig auf die elektromagnetische Verträglichkeit (EMV) auswirken und aufwendige Abschirmungsmaßnahmen erforderlich werden. Unter Umständen können jedoch auch bei aufwendigen Abschirmungsmaßnahmen diese Probleme nicht gelöst werden, so dass insgesamt die Funktionsfähigkeit und die Einsatzmöglichkeiten der Batteriespeichersysteme in der Praxis stark beschränkt sind. Die mit hohen Frequenzen einhergehende Erwärmung macht darüber hinaus eine Kühlung der einzelnen Energiespeichermodule erforderlich.

Die WO 2018/162122 A1 schlägt bereits vor, dass gegebenenfalls nur einer der den Energiespeichermodulen zugeordneten Schaltern zur PWM-Erzeugung ausgebildet ist. Dennoch werden auch hiermit die bei derartigen Batteriespeichersystemen auftretenden Probleme insbesondere im Hinblick auf elektromagnetische Störausstrahlung nicht befriedigend gelöst.

### AUFGABE UND LÖSUNG

Die Erfindung stellt sich demgegenüber die Aufgabe, ein verbessertes modulares Batteriespeichersystem bereitzustellen, das auf der einen Seite eine kostengünstige Lösung bietet und auf der anderen Seite im Betrieb sehr robust und störunanfällig ist. Insbesondere soll das Batteriespeichersystem dazu in der Lage sein, die mit den einzelnen Energiespeichermodulen erzeugte Spannung in ein Wechselstromnetz einzuspeisen.

Diese Aufgabe wird durch ein modulares Batteriespeichersystem mit den Merkmalen des Anspruchs 1 sowie durch ein Verfahren zum Betrieb eines solchen modularen Batteriespeichersystems gemäß dem weiteren unabhängigen Anspruch gelöst. Bevorzugte Ausgestaltungen des modularen Batteriespeichersystems und des Verfahrens zum Betreiben dieses Batteriespeichersystems sind Gegenstand der abhängigen Ansprüche.

Das erfindungsgemäße modulare Batteriespeichersystem umfasst eine Gruppe aus n wiederaufladbaren Energiespeichermodulen. Dabei weist das erfindungsgemäße modulare Batteriespeichersystem stets die folgenden Merkmale auf:
a. Die Energiespeichermodule umfassen jeweils mindestens ein, vorzugsweise mehrere wiederaufladbare Energiespeicherelemente, und
b. jedem einzelnen der *n* Energiespeichermodule ist ein Schalter zugeordnet, über den das jeweilige Energiespeichermodul aktiviert und deaktiviert werden kann, und
c. die *n* Energiespeichermodule sind über die Schalter derart miteinander verschaltbar, dass sich die Einzelspannungen *U_{Einzel}* von aktivierten Energiespeichermodulen zu einer Gesamtspannung *U_{Gesamt}* addieren können, und
d. das Batteriespeichersystem umfassteine Steuereinrichtung zur Ansteuerung der den *n* Energiespeichermodulen zugeordneten Schalter,

Der Kernpunkt der Erfindung liegt darin, dass das modulare Batteriespeichersystem eine Modulationseinheit (Merkmal e.) aufweist, welche sich durch die folgenden Merkmale i. bis iii. auszeichnet:
i. Die Modulationseinheit ist derart mit den verschaltbaren *n* Energiespeichermodulen verbunden, dass sie die Gesamtspannung *U_{Gesamt}* zu modulieren vermag,
ii. die Modulationseinheit umfasst einen Pulsweitenmodulationsschalter, und
iii. die Modulationseinheit umfasst ein Gehäuse, das den Pulsweitenmodulationsschalter umschließt und das dazu ausgebildet ist, elektronische Komponenten außerhalb des Gehäuses gegen von dem Pulsweitenmodulationsschalter ausgehende elektromagnetische Störausstrahlung abzuschirmen.

Schalter zur Pulsweitenmodulation gehören zum Stand der Technik und sind käuflich erhältlich. Erfindungsgemäß bevorzugt zeichnet sich das erfindungsgemäße modulare Batteriespeichersystem durch mindestens eines der unmittelbar folgenden zusätzlichen Merkmale a. bis c. aus:
a. Der Pulsweitenmodulationsschalter umfasst eine Mehrzahl von Halbleiterschaltern.
b. Der Pulsweitenmodulationsschalter umfasst eine H-Brückenschaltung mit vier Halbleiterschaltern.
c. Die H-Brückenschaltung umfasst zwei Leitungszweige mit jeweils zwei Halbleiterschaltern, die über einen Kondensator miteinander verbunden sind.

Besonders bevorzugt sind die unmittelbar vorstehenden Merkmale a. bis c. bei der Erfindung in Kombination realisiert.

Bei den Halbleiterschaltern handelt es sich besonders bevorzugt um MOSFETs. Alternativ zu diesen können als Halbleiterschaltelemente beispielsweise aber auch Bipolartransistoren, insbesondere Bipolartransistoren mit isolierter Gate-Elektrode (IGBTs) verwendet werden.

In weiteren bevorzugten Ausführungsformen zeichnet sich das erfindungsgemäße modulare Batteriespeichersystem durch mindestens eines der unmittelbar folgenden zusätzlichen Merkmale a. und b. aus:
a. Die Modulationseinheit umfasst eine Filterdrossel, die in Entladerichtung dem Pulsweitenmodulationsschalter nachgeschaltet ist.
b. Das Gehäuse umschließt auch die Filterdrossel.

Besonders bevorzugt sind die unmittelbar vorstehenden Merkmale a. und b. bei der Erfindung in Kombination realisiert.

Das erfindungsgemäße Batteriespeichersystem vermag durch entsprechende Aktivierung und Deaktivierung von einzelnen Energiespeichermodulen eine stufenförmige Gesamtspannung zu erzeugen, die mittels der Modulationseinheit und dem darin enthaltenen Pulsweitenmodulationsschalter in einen insgesamt pulsweitenmodulierten Spannungsverlauf umgewandelt wird, der dem gewünschten Spannungsverlauf stark angenähert ist. Durch die Pulsweitenmodulation (PWM) werden dabei die Übergänge zwischen einzelnen Spannungsstufen abgefedert. Mittels der nachgeschalteten Filterdrossel wird der Spannungsverlauf weiter geglättet, so dass die gewünschte Kurvenform erzeugt wird. Somit ist beispielsweise in besonders vorteilhafter Weise eine Umrichtung der mit den einzelnen Energiespeichermodulen erzeugten Gleichspannung in einen sinusförmigen Verlauf möglich, wobei diese Spannung in ein Wechselstromnetz eingespeist werden kann.

Der besondere Vorteil des erfindungsgemäßen Batteriespeichersystems liegt darin, dass die PWM an zentraler Stelle in der Modulationseinheit durchgeführt wird, in die die addierten Einzelspannungen einfließen. Die Modulationseinheit fasst dabei den Pulsweitenmodulationsschalter mit der nachgeschalteten Filterdrossel, die die Glättung der Kurve und damit deren Einspeisung in das Netz ermöglicht, zusammen, wobei diese Modulationseinheit insgesamt durch ein geeignetes Gehäuse, insbesondere ein metallisches Gehäuse, derart abgeschirmt ist, dass bei diesem Vorgang erzeugte elektromagnetische Störausstrahlung zuverlässig abgefangen wird und nicht nach außen dringt. Das Gehäuse der Modulationseinheit umschließt bevorzugt sowohl den Pulsweitenmodulationsschalter als auch die Filterdrossel.

In einigen bevorzugten Ausführungsformen befindet sich auch die Steuereinrichtung innerhalb des Gehäuses.

Durch die PWM an zentraler Stelle wird vermieden, dass eine derartige Pulsweitenmodulation in den einzelnen Energiespeichermodulen durchgeführt werden müsste, was mit verschiedenen Problemen behaftet ist. Insbesondere wird hierdurch vermieden, dass dezentral elektromagnetische Störstrahlung erzeugt wird. Das Erfordernis einer elektromagnetischen Abschirmung ist daher auf die Modulationseinheit beschränkt, so dass alle übrigen Komponenten des Batteriespeichersystems wesentlich einfacher und kostengünstiger ausgebildet sein können.

Die zentrale Durchführung der PWM in der Modulationseinheit des erfindungsgemäßen modularen Batteriespeichersystems ist mit erheblichen Kostenvorteilen verbunden. Wenn beispielsweise in jedem einzelnen Energiespeichermodul eine PWM bzw. in dem zugeordneten Schalter eine PWM, wie im Stand der Technik, vorgesehen wäre, würden durch die hierfür erforderlichen schnellen Schaltelemente und die erforderlichen schnellen und leistungsstarken Treiber erhebliche Kosten aufzuwenden sein. In dem modularen Batteriespeichersystem gemäß der Erfindung hingegen können die einzelnen Energiespeichermodule wesentlich einfacher ausgestaltet werden, da die zugehörigen Schalter lediglich ein An- und Ausschalten bzw. ein Aktivieren und Deaktivieren des Energiespeichermoduls erlauben müssen. Hierfür können kostengünstige Schalter verwendet werden, die mit einer vergleichsweise niedrigen Taktfrequenz betrieben werden.

Die mit einer PWM bei den einzelnen Energiespeichermodulen von herkömmlichen Systemen erforderlichen hohen Frequenzen gehen bei herkömmlichen modularen Batteriespeichersystemen darüber hinaus mit einer großräumigen Wärmeentwicklung in der Peripherie des Systems einher, die durch entsprechende Kühlsysteme reguliert werden muss. Auch hierauf kann bei dem erfindungsgemäßen modularen Batteriespeichersystem verzichtet werden, wobei allenfalls eine Kühlung der Modulationseinheit erforderlich ist. Auch dies ist mit einem erheblichen Kostenvorteil verbunden.

Bei einem herkömmlichen modularen Batteriespeichersystem mit einer PWM in den Schaltern der einzelnen Energiespeichermodule sind infolge der PWM-Taktung in der weitläufigen Verdrahtung von derartigen Batteriespeichersystemen durch die pulsierenden, elektromagnetischen Felder beträchtliche Störungen zu beobachten, die sich auf der einen Seite auf die Funktionsfähigkeit des Systems selbst störend auswirken können und auf der anderen Seite auch nach außen hin abgeschirmt werden müssen, um Vorgaben zur elektromagnetischen Verträglichkeit einhalten zu können. Eine derartige Abschirmung wirft insbesondere durch die weitläufigen Raumerfordernisse von derartigen Systemen große Probleme auf, die bei dem erfindungsgemäßen modularen Batteriespeichersystem nahezu vollständig vermieden werden, da im Prinzip ausschließlich die Modulationseinheit elektromagnetisch abgeschirmt werden muss.

Die bei herkömmlichen modularen Batteriespeichersystemen mit einer PWM-Schaltung, die den einzelnen Energiespeichermodulen zugeordnet ist, erforderliche Regelung des jeweils richtigen PWM-Verhältnisses zur genau richtigen Zeit für das jeweilige Energiespeichermodul ist aufwendig und erfordert eine echtzeitfähige Kommunikation und Datenübertragung. Auch dieser Aspekt fällt bei dem erfindungsgemäßen modularen Batteriespeichersystem weg, so dass auch in dieser Hinsicht die Ausgestaltung des modularen Batteriespeichersystems im Vergleich mit herkömmlichen Systemen wesentlich einfacher und robuster ausgestaltet werden kann. Insbesondere sind dabei Fehler in der PWM der einzelnen Energiespeichermodule ausgeschlossen, die bei herkömmlichen Systemen gegebenenfalls zu Netzstörungen, Betriebsstörungen bei dem Betrieb des Batteriespeichersystems selbst bis hin zu Hardwaredefekten des Systems führen können.

Ein weiterer besonderer Vorteil der Durchführung der PWM an zentraler Stelle in der separaten Modulationseinheit des Batteriespeichersystems liegt darin, dass in der separaten Modulationseinheit eine optimale elektromagnetische Abschirmung möglich ist, so dass die PWM mit sehr hoher Frequenz gefahren werden kann. Hierdurch ist es möglich, die nachgeschaltete Filterdrossel, die bei hohen Frequenzen am wirksamsten ist, relativ klein auszulegen. Dies ist besonders vorteilhaft, da im Allgemeinen die Filterdrossel mit zunehmender Größe das kostenintensivste Bauteil des Systems ist.

Die Modulationseinheit kann sehr kompakt aufgebaut werden, wodurch die Abschirmung gegenüber elektromagnetischer Störausstrahlung weiter vereinfacht wird.

Durch die Vermeidung von hochfrequenten Strömen und Spannungen in den einzelnen Energiespeichermodulen ist die elektromagnetische Verträglichkeit gegenüber herkömmlichen Systemen erheblich verbessert und der Schirmungs- und Filterungsaufwand ist wesentlich geringer als bei herkömmlichen Systemen. Auch sinken die Anforderungen an die Verkabelung der Energiespeichermodule, insbesondere kann mit besonderem Vorteil auf eine Abschirmung für die Signalleitungen verzichtet werden.

Insgesamt können bei dem erfindungsgemäßen modularen Batteriespeichersystem die einzelnen Energiespeichermodule wesentlich einfacher als bei herkömmlichen Batteriespeichersystemen ausgestaltet werden. Die damit verbundenen Einsparungen multiplizieren sich mit der Anzahl der einzelnen Energiespeichermodule. So können die Energiespeichermodule mit konventioneller Technik hergestellt werden, da keine Intelligenz der Energiespeichermodule erforderlich ist und da eine einfache, günstige Hardware und nur wenig Softwareaufwand für die einzelnen Energiespeichermodule erforderlich ist. Darüber hinaus ist weniger Kühlaufwand in den einzelnen Energiespeichermodulen und damit im Gesamtsystem notwendig. Es ist keine komplexe und zeitkritische Kommunikation zwischen der Steuereinrichtung und den einzelnen Energiespeichermodulen erforderlich. Beispielsweise ist kein Datenbus zur Ansteuerung der einzelnen Energiespeichermodule erforderlich. Insgesamt kann damit das erfindungsgemäße Batteriespeichersystem wesentlich störfester und kostengünstiger hergestellt werden.

Mögliche Konfigurationen von Energiespeichermodulen erfindungsgemäßer Batteriespeichersysteme sind eingangs beschrieben. Die beschriebenen Konfigurationen sind auch im Rahmen des erfindungsgemäßen modularen Batteriespeichersystems bevorzugt. Bei den Energiespeicherelementen kann es sich beispielsweise um gealterte Energiespeicherelemente mit bereits reduzierter Kapazität handeln, die aus anderen Anwendungen stammen, z. B. aus Automobilanwendungen, und die durch den Einsatz in einem solchen modularen Batteriespeichersystem weiterhin zweckbringend eingesetzt werden können.

Besonders bevorzugt umfassen erfindungsgemäß einsetzbare Energiespeichermodule elektrochemische Zellen, insbesondere auf Basis von Lithium-Ionen-Technologie und/oder auf Basis von Nickel-Metallhydrid-Technologie.

Die von dem Batteriespeichersystem umfassten Energiespeichermodule können alle die gleichen Einzelspannungen *U_{Einzel}* aufweisen. Dies muss aber keineswegs immer so sein. Im Gegenteil, es kann sogar bevorzugt sein, Energiespeichermodule mit unterschiedlichen Einzelspannungen *U_{Einzel}* innerhalb des gleichen Systems zu verbauen. Dies kann die darstellbaren Varianten der Gesamtspannung *U_{Gesamt}* erhöhen.

Die Schalter sind bevorzugt derart ausgebildet, dass die jeweils zugeordneten Energiespeichermodule auch mit umgekehrter Polarität aktiviert werden können. Auch hierdurch werden die darstellbaren Varianten der Gesamtspannung *U_{Gesamt}* erhöht, insbesondere wenn gleichzeitig Energiespeichermodule mit unterschiedlichen Einzelspannungen *U_{Einzel}* innerhalb des gleichen Systems verbaut werden. Dies ist besonders vorteilhaft, da die Einzelspannung *U_{Einzel}* eines in umgekehrter Polarität aktivierten Energiespeichermoduls einen negativen Beitrag zur Gesamtspannung *U_{Gesamt}* leistet.

Wenn eines der n Energiespeichermodule deaktiviert ist, so leistet es keinen Beitrag zu der Gesamtspannung *U_{Gesamt}.* In besonders bevorzugten Ausführungsformen sind die Schalter dazu ausgebildet, das jeweils zu ihnen gehörige Energiespeichermodul bei Bedarf überbrücken zu können. Überbrückte deaktivierte Energiespeichermodule sind nicht mehr elektrisch mit den weiteren Energiespeichermodulen der Gruppe verbunden.

Das erfindungsgemäße modulare Batteriespeichersystem kann eine sehr große Anzahl an Energiespeichermodulen umfassen. In der Regel ist die Variable n ein Wert im Bereich von 2 bis 100000, bevorzugt im Bereich von 2 bis 10000, besonders bevorzugt 2 bis 1000. Innerhalb dieser Bereiche gilt weiter bevorzugt, dass die Variable n ein Wert im Bereich von 5 bis 100, besonders bevorzugt von 5 bis 20, insbesondere von 7 bis 10, ist.

In bevorzugter Weise zeichnet sich das erfindungsgemäße modulare Batteriespeichersystem durch mindestens eines der unmittelbar folgenden zusätzlichen Merkmale a. bis c. aus:
a. Die Modulationseinheit umfassteinen Tiefpassfilter, der in Entladerichtung dem Pulsweitenmodulationsschalter vorgeschaltet ist.
b. Die Modulationseinheit umfassteinen Tiefpassfilter, der in Entladerichtung dem Pulsweitenmodulationsschalter nachgeschaltet ist.
c. Das Gehäuse umschließt auch das Tiefpassfilter und/oder das Tiefpassfilter.

Bei den Tiefpassfiltern, die in bevorzugten Ausführungsformen dem Pulsweitenmodulationsschalter vorgeschaltet und/oder nachgeschaltet sind, kann es sich um übliche Tiefpassfilter handeln, mitdenen hochfrequente Anteile der Gesamtspannung bis zu einer Grenzfrequenz im Bereich von 100 kHz bis 1 GHz gedämpft werden. Eine Tiefpassfilterung vor der Einleitung der Gesamtspannung in den Pulsweitenmodulationsschalter hat den besonderen Vorteil, dass hierdurch die PWM in dem Pulsweitenmodulationsschalter durch die reduzierten hochfrequenten Anteile weniger aufwendig ist.

In besonders bevorzugter Weise ist es vorgesehen, dass alternativ oder zusätzlich zum vorgeschalteten Tiefpassfilter auch nach der Filterdrossel ein Tiefpassfilter mit der genannten Charakteristik vorgesehen ist. In besonders bevorzugter Weise ist ein Tiefpassfilter am Eingang der Modulationseinheit und ein weiteres Tiefpassfilter am Ausgang der Modulationseinheit vorgesehen.

Die Filterdrossel unterscheidet sich gegenüber dem oder den Tiefpassfiltern vorzugsweise darin, dass die Filterdrossel zur Glättung von vergleichsweise niedrigfrequenten Anteilen im Frequenzbereich von 1 kHz bis 10 MHz ausgelegt ist, vor allem in Bezug auf die Taktfrequenz des Wandlers und auf niedrigskalige Oberwellen.

Besonders geeignete Filterdrosseln besitzen vorzugsweise einen ferromagnetischen Kern, der so ausgelegt ist, dass er bei der Taktfrequenz des Wandlers und den niedrigskaligen Oberwellen wirksam ist. Geeignete Materialen weisen dabei vorzugsweise hohe Permeabilitäten auf, so dass die Windungszahlen klein sein können und die Kupferverluste in Grenzen gehalten werden. Solche auch als "Power-Ferrite" bezeichnete Kerne sind dabei im Bereich von EMV-relevanten, höheren Frequenzen, beispielsweise im MHz-Bereich, weitgehend unwirksam. Trotz der durch die hohe Permeabilität des weichmagnetischen Kerns kleinstmöglich gehaltenen Kupferwicklung ist die Bewicklung dennoch mit relativ hohen, parasitären Kapazitäten behaftet, die die Filterdrossel für hohe Frequenzen gleichsam überbrücken und damit unwirksam machen. Insgesamt filtert die Filterdrossel vorzugsweise die niedrigeren Frequenzanteile.

Das oder die vorzugsweise vorgesehenen Tiefpassfilter können auch als EMV-Filter bezeichnet werden, da sie vorzugsweise elektromagnetische Störstrahlung herausfiltern. Vorzugsweise weisen das oder die Tiefpassfilter einen Spulenkern mit Tauglichkeit für hohe Frequenzen auf. Diese Materialen weisen zwar in der Regel auf der einen Seite deutlich geringere Permeabilitäten und Sättigungsflussdichten als die erwähnten "Power"-Materialien auf, so dass sie zu wenig Induktivität für die Grundfrequenz besitzen. Auf der anderen Seite hingegen sind sie bei den besonders EMV-relevanten, hohen Frequenzen wirksam. Insbesondere zeichnen sich das oder die Tiefpassfilter durch eine kapazitätsarme Wicklung aus. Bedingt durch das Kernmaterial weisen sie eine geringe Induktivität auf.

Vorzugsweise enthalten das oder die Tiefpassfilter auch Glättungs- bzw. Ableitkondensatoren. Darüber hinaus können das oder die Tiefpassfilter auch eine zusätzliche, stromkompensierte Drossel und gegebenenfalls Y-Kondensatoren zur Bekämpfung von Gleichtaktstörungen aufweisen. Dabei setzen stromkompensierte Drosseln einer auftretenden Gleichtaktstörung eine hemmende Impedanz entgegen. Y-Kondensatoren leiten das, was noch übrig ist, gegen Erde ab.

Die Ausbildung des Pulsweitenmodulationsschalters als eine H-Brückenschaltung mit vier Halbleiterschaltern ist prinzipiell vergleichbar mit der leistungselektronischen Grundstruktur einer an sich bekannten Multilevel-Umrichter-Stufe. Die Spannung über dem Kondensator wird dabei vorteilhafterweise über die Ansteuerung der Leistungshalbleiter per Pulsweitenmodulation eingestellt bzw. geregelt. Dies hat den besonderen Vorteil, dass der Kondensator keine dedizierte Ladeschaltung benötigt.

In besonders bevorzugten Ausgestaltungen des erfindungsgemäßen modularen Batteriespeichersystems zeichnet sich das Batteriespeichersystem im Hinblick auf die Modulationseinheit durch eines der unmittelbar folgenden zusätzlichen Merkmale a. und b. aus:
a. Die Modulationseinheit umfasst eine Kühleinrichtung.
b. Der Modulationseinheit ist eine Kühleinrichtung zugeordnet.

Durch die hochfrequenten Ströme, die bei dem erfindungsgemäßen modularen Batteriespeichersystem prinzipiell ausschließlich im Bereich der Modulationseinheit auftreten, kann es innerhalb der Modulationseinheit zu einer Wärmeentwicklung kommen, der zweckmäßigerweise mit einer Kühleinrichtungzur Kühlungder Modulationseinheit begegnet wird. Diese Kühleinrichtung kann innerhalb des Gehäuses der Modulationseinheit angeordnet sein oder es kann sich auch um eine externe Kühleinrichtung handeln, die der Modulationseinheit zugeordnet ist. Hierfür können beispielsweise an sich bekannte Kühlkreisläufe oder andere Kühlelemente zum Einsatz kommen.

In besonders bevorzugter Weise zeichnet sich das erfindungsgemäße modulare Batteriespeichersystem durch mindestens eines, vorzugsweise beide, der nachfolgenden zusätzlichen Merkmale a. und b. aus:
a. Die Schalter, die den *n* Energiespeichermodulen zugeordnet sind, sind nicht zur Pulsweitenmodulation eingerichtet.
b. Die *n* Energiespeichermodule weisen keine oder lediglich eine passive Kühleinrichtung auf oder denn Energiespeichermodulen ist keine oder lediglich eine passive Kühleinrichtungzugeordnet.

Dadurch, dass die *n* Energiespeichermodule des erfindungsgemäßen Batteriespeichersystems nicht zur Pulsweitenmodulation eingerichtet sind, können erhebliche Einsparungen bei dem erfindungsgemäßen modularen Batteriespeichersystem vorgenommen werden, da die Energiespeichermodule sehr einfach aufgebaut sein können und keine aufwendigen Schaltungen benötigen. Da gemäß dem erfindungsgemäßen Konzept die Pulsweitenmodulation an zentraler Stelle in der Modulationseinheit erfolgt, sind keine aufwendigen Pulsweitenmodulationsschalter an den einzelnen Energiespeichermodulen erforderlich. Dies bringt verschiedene Vorteile mit sich. Neben dem erwähnten Einsparungspotenzial ergeben sich auch besondere Vorteile im Hinblick auf die Wärmeentwicklung in dem erfindungsgemäßen modularen Batteriespeichersystem. Durch den Verzicht einer Pulsweitenmodulation bei den einzelnen Energiespeichermodulen sind in diesen Bereichen keine hochfrequenten Ströme erforderlich und es besteht keine Notwendigkeit von aufwendigen Kühlsystemen oder Kühleinrichtungen, da es bei den Energiespeichermodulen nicht zu einer übermäßigen Wärmeentwicklung kommt. In bevorzugten Ausführungsformen sind kostengünstige Kühlmaßnahmen, beispielsweise vergrößerte Kupferflächen auf der Leiterplatte und/oder aufgelötete SMD-Kühlkörper (SMD - oberflächenmontierte Bauelemente), bei den Energiespeichermodulen vorgesehen, die ausreichend sind, um die auftretenden Leitungsverluste auszugleichen. Darüber hinaus können Kühlmaßnahmen im Hinblick auf die ohmschen Verluste bei dem Betrieb der Energiespeicherelemente in den einzelnen Energiespeichermodulen erforderlich bzw. sinnvoll sein.

Weitere besondere Vorteile in diesem Zusammenhang ergeben sich aus der oben bereits erläuterten besonders vorteilhaften elektromagnetischen Verträglichkeit, da durch den Verzicht auf hochfrequente Ströme im Bereich der Energiespeichermodule keine übermäßigen elektromagnetischen Störströme im Bereich der Energiespeichermodule entstehen. Eine elektromagnetische Abschirmung gegenüber Störstrahlungen ist also im Bereich der Energiespeichermodule nicht erforderlich. Lediglich im Bereich derzentralen Modulationseinheit ist eine Abschirmung gegenüber elektromagnetischer Störausstrahlung sinnvoll und erforderlich.

In besonders bevorzugter Weise zeichnet sich das erfindungsgemäße modulare Batteriespeichersystem im Hinblick auf die Ansteuerung der Energiespeichermodule durch das unmittelbar folgende zusätzliche Merkmal a. aus:
a. Zur Ansteuerung der den Energiespeichermodulen zugeordneten Schalter sind 0/1-Signalleitungen vorgesehen.

Da für die einzelnen Energiespeichermodule keine Pulsweitenmodulation vorgesehen ist und die Pulsweitenmodulation ausschließlich an zentraler Stelle in der Modulationseinheit erfolgt, kann auch die Ansteuerung der einzelnen Energiespeichermodule sehr einfach gestaltet werden. Insbesondere ist es besonders vorteilhaft, wenn zur Ansteuerung der den Energiespeichermodulen zugeordneten Schalter lediglich 0/1-Signalleitungen vorgesehen sind. Zur Ansteuerung der Schalter der einzelnen Energiespeichermodule kann dabei beispielsweise ein vergleichsweise langsames, gemeinsames Bussystem genutzt werden, da nur ein Zuschalten und Abschalten der einzelnen Energiespeichermodule erforderlich ist. Diese Ausgestaltung der Ansteuerung der Energiespeichermodule ist auf der einen Seite im Prinzip ausreichend für den Betrieb des erfindungsgemäßen modularen Batteriespeichersystems und ermöglicht auf der anderen Seite ein erhebliches Kosteneinsparungspotenzial.

Zur Verbesserung der Störfestigkeit können in bevorzugten Ausführungsformen für die 0/1-Signalleitungen statt üblicher Kupferdrähte auch Lichtleiter verwendet werden. Lichtleiter sind zwar etwas teurer als Kupferdrähte, weisen aber bereits eine inhärente galvanische Trennung auf und werden von elektromagnetischen Störungen im Prinzip nicht beeinflusst. Da in der Regel bei dem erfindungsgemäßen System keine hohen Taktraten erforderlich sind, können die erforderlichen Transmitter/Receiver sehr einfach und damit kostengünstig ausgeführt werden.

Alternativ zu einer 0/1-Signalleitungen können auch sogenannte Tri-State-Elemente eingesetzt werden. Hierbei handelt es sich um digitale Schaltelemente, deren Ausgänge nicht nur 0 und 1, sondern zusätzliche einen dritten, hochohmigen Zustand annehmen können.

In einer besonders bevorzugten Ausgestaltung des erfindungsgemäßen modularen Batteriespeichersystems zeichnet sich das System durch das unmittelbar folgende zusätzliche Merkmal a. aus:
a. Die Steuereinrichtung ist derart eingerichtet, dass sich mindestens zwei der Energiespeichermodule über die jeweils zugeordneten Schalter zeitlich überlappend, aber über unterschiedlich lange Aktivierungszeiträume aktivieren lassen, um eine sich zeitlich ändernde Gesamtspannung *U_{Gesamt}* (t) zu erzeugen.

Die zeitlich sich ändernde Gesamtspannung *U_{Gesamt}*(t) kann mit grundsätzlich beliebigen Spannungsverläufen erzeugt werden. So lässt sich eine Sägezahnspannung in ebenso guter Näherung erzeugen wie eine Dreieckspannung.

Besonders bevorzugt handelt es sich bei *U_{Gesamt}*(t) insbesondere um eine Spannung mit sinusförmigem Spannungsverlauf, wie sie eingangs bereits Erwähnung fand. Das erfindungsgemäße modulare Batteriespeichersystem kann also in bevorzugten Ausführungsformen in Form eines Entladeverfahrens betrieben werden, bei dem Strom aus einer Gleichspannungsquelle unter Umwandlung von Gleichspannung in Wechselspannung in ein Wechselstromnetz eingespeist wird.

Neben der Ansteuerung der Energiespeichermodule zeichnet sich das erfindungsgemäße modulare Batteriespeichersystem im Hinblick auf die Funktionen der Steuereinrichtung weiterhin in besonders bevorzugter Weise durch das unmittelbar folgende zusätzliche Merkmal aus:
a. Die Steuereinrichtung ist zur Regelung des Pulsweitenmodulationsschalters in der Modulationseinheit eingerichtet.

In dieser bevorzugten Ausführungsform übernimmt also die Steuereinrichtung sowohl die Ansteuerung und Schaltung der *n* Energiespeichermodule als auch die Regelung des Pulsweitenmodulationsschalters in der Modulationseinheit. Für die direkte Ansteuerung des Pulsweitenmodulationsschalters ist vorzugsweise ein Signalbus vorgesehen, der für hohe Geschwindigkeiten ausgelegt ist. Für die Ansteuerung der *n* Energiespeichermodule ist die Übertragung eines einfachen 0/1-Signals mit niedriger Frequenz ausreichend.

In bevorzugten Ausgestaltungen zeichnet sich die Steuereinrichtung des modularen Batteriespeichersystems durch eines der unmittelbar folgenden zusätzlichen Merkmale aus:
a. Die Steuereinrichtung ist ein Signalprozessor.
b. Die Steuereinrichtung ist ein Mikrocontroller.

Die Erfindung umfasst weiterhin ein Verfahren zum Betreiben eines modularen Batteriespeichersystems gemäß derobigen Beschreibung. In besonders bevorzugterWeise umfasst dieses Verfahren die unmittelbar folgenden Schritte a. und b.:
a. Durch sukzessives Aktivieren und Deaktivieren der *n* Energiespeichermodule wird eine Treppenspannung erzeugt, und
b. die Treppenspannung wird in die Modulationseinheit geleitet und durch eine Pulsweitenmodulation und mindestens eine Filterung in eine geglättete Sinusspannung überführt.

In besonders bevorzugter Weise kann die geglättete Sinusspannung als eine Phase in ein Wechselstromnetz eingespeist werden. Somit kann die mit den einzelnen Energiespeichermodulen erzeugte Gleichspannung durch eine entsprechende sequenzielle Ansteuerung der einzelnen Energiespeichermodule in eine Wechselspannung überführt und in entsprechenden Stromnetzen genutzt werden. Gleichfalls eignet sich das System auch für Verfahren zum Betreiben von Mehrphasensystemen, beispielsweise zur Erzeugung von Drehstrom.

Darüber hinaus kann das System auch zur Versorgung von Gleichstromanwendungen genutzt werden, zum Beispiel zum Laden von Elektroautos oder anderem. Das System wäre aber auch dazu in der Lage, Gleichspannung sowohl zu liefern als auch zu beziehen, beispielsweise aus einem Photovoltaiksystem, ohne dass dafür bauliche Änderungen vorgenommen werden müssten. Der dabei gespeicherte Strom kann als Wechselstrom in ein Netz eingespeist oder aber als Gleichstrom beispielsweise zum Laden eines Elektrofahrzeugs verwendet werden.

Es wäre so möglich, ein erfindungsgemäßes System als Ladevorrichtung, beispielsweise für E-Fahrzeuge, auszubilden, wobei der Multilevel-Umrichter des Systems dazu ausgebildet ist, konfigurierbar per Software wahlweise Gleichspannung oder Wechselspannung zu liefern. Damit wäre eine einzige Ladevorrichtung mit einer einzigen Leistungselektronik dazu in der Lage, verschiedene Ladesysteme zu bedienen.

Prinzipiell lassen sich beim Betreiben des erfindungsgemäßen modularen Batteriespeichersystems auch andere beliebige Kurvenformen generieren. So eignet sich das erfindungsgemäße modulare Batteriespeichersystem beispielsweise auch zur Erzeugung einer Gleichspannung, die beispielsweise für Photovoltaikanlage-Anwendungen oder zum Laden von Elektrofahrzeugen oder für andere Zwecke eingesetzt werden kann.

In besonders bevorzugter Weise zeichnet sich das erfindungsgemäße Verfahren durch das unmittelbar folgende zusätzliche Merkmal a. aus:
a. Die Energiespeichermodule des modularen Batteriespeichersystems werden mit einer Frequenz zwischen 50 und 500 Hz, insbesondere mit 100 Hz, angesteuert.

Eine Schaltung mit einer Frequenz von 100 Hz ist besonders vorteilhaft, da dies die Frequenz der Netz-Halbwellen in Haushaltsnetzen entspricht, so dass durch eine solche Schaltung der Energiespeichermodule die erzeugte Wechselspannung ohne Weiteres als eine Phase in ein Haushaltsnetz eingespeist werden kann.

In besonders bevorzugter Weise zeichnet sich das erfindungsgemäße Verfahren weiterhin durch das unmittelbar folgende zusätzliche Merkmal aus:
a. Der Pulsweitenmodulationsschalter der Modulationseinheit wird mit einer hohen Frequenz angesteuert.

Die hohen Frequenzen für die Ansteuerung des Pulsweitenmodulationsschalters liegen vorzugsweise in einem Bereich von 1 kHz bis 1 Mhz. Der tatsächlich gewählte Frequenzbereich ist zweckmäßigerweise an die verwendete Schaltungstechnik und/oder Halbleitertechnologie angepasst. In besonders bevorzugten Ausführungsformen liegt die Frequenz in einem Bereich zwischen 10 kHz und 200 kHz.

Durch die hohen Frequenzen bei der Ansteuerung des Pulsweitenmodulationsschalters istdie Effektivität der nachgeschalteten Filterdrossel besonders hoch, so dass bei einer hohen Taktfrequenz für die Pulsweitenmodulation die Filterdrossel sogar verkleinert werden kann. Die Verkleinerung der Filterdrossel bietet dabei ein besonderes Einsparungspotenzial bei der Ausgestaltung des erfindungsgemäßen modularen Batteriespeichersystems bzw. bei der Ausgestaltung der Modulationseinheit, so dass eine hohe Taktfrequenz bei der Ansteuerung des Pulsweitenmodulationsschalters besonders bevorzugt ist. Durch die erfindungsgemäße Ausgestaltung des Batteriespeichersystems und insbesondere durch das Gehäuse der Modulationseinheit sind die mit hohen Frequenzen einhergehenden elektromagnetischen Störausstrahlungen nicht problematisch, da durch eine kompakte Bauweise der Modulationseinheit eine entsprechende Ausgestaltung mit Abschirmungselementen, zum Beispiel durch ein metallisches Gehäuse, ohne großen Aufwand möglich ist.

Das Gehäuse ist in bevorzugten Ausgestaltungen ein metallisches Gehäuse. Es kann jedoch auch vorgesehen sein, dass für das Gehäuse oder zumindest für abschirmende Elemente des Gehäuses ein metallisierter Kunststoff verwendet wird, das Gehäuse also aus Kunststoffteilen besteht, die eine metallische Beschichtung aufweisen.

In bevorzugten Ausführungsformen ist das Gehäuse derart zur Abschirmung ausgebildet, dass ein im Wesentlichen lückenlos die Leistungselektronik umschließender faradayscher Käfig ausgebildet wird, der keine Schlitze oder andere Öffnungen ausbildet, die bei den auftretenden Frequenzen Resonanzen bzw. Antennen bilden könnten. Weiterhin können als abschirmende Maßnahmen beispielsweise Metallgitter vorgesehen sein, die Lüftungsöffnungen abdecken.

Zweckmäßigerweise ist in besonders bevorzugten Ausgestaltungen des Systems eine Datenkommunikation zu den einzelnen Energiespeichermodulen vorgesehen. Im Vergleich mit herkömmlichen Systemen kann ein entsprechender Kommunikationsbus jedoch wesentlich einfacher ausgebildet sein. Insbesondere ist keine echtzeitfähige Datenübertragung erforderlich, so dass bevorzugten Datenkommunikationsleitungen nicht echtzeitfähig sind. So können in diesem Zusammenhang beispielsweise kostengünstige Schnittstellen wie CAN oder RS485 verwendet werden.

In weiteren bevorzugten Ausgestaltungen des erfindungsgemäßen modularen Batteriespeichersystems bzw. in bevorzugten Ausgestaltungen des Verfahrens zum Betreiben eines solchen Batteriespeichersystems kann es vorgesehen sein, dass für jedes der *n* Energiespeichermodule mindestens ein Leistungsparameter bzw. mindestens ein Leistungswert ermittelt wird. In Abhängigkeit des ermittelten Leistungsparameters können den einzelnen Energiespeichermodulen unterschiedlich lange Aktivierungszeiträume zugeordnet werden. Mit anderen Worten, in Abhängigkeit des mindestens einen Leistungsparameters wird eine Zuordnung vorgenommen, welche der Energiespeichermodule nur für eine kurze Zeitdauer (einen kurzen Aktivierungszeitraum) und welche der Energiespeichermodule für eine längere Zeitdauer (einen längeren Aktivierungszeitraum) aktiviert werden.

Allgemein spielt für den Betrieb eines Batteriespeichersystems die aktuelle Restkapazität (*State-of-Charge,* kurz: SOC) und die maximal verfügbare Kapazität (*State-of-Health,* kurz: SOH) der von dem Batteriespeichersystem umfassten Energiespeichermodule eine Rolle. Potentiell problematisch ist hierbei, dass SOC und SOH einzelner Energiespeichermodule in einem Batteriespeichersystem sehr stark divergieren können, beispielsweise in Folge von unterschiedlich schneller Alterung. In aller Regel bestimmen die Energiespeichermodule mit den schlechtesten Leistungswerten die Gesamtperformance eines Batteriespeichersystems.

Mit Hilfe sogenannter *Balancing*-Systeme kann bekanntermaßen ein Ladungs- und/oder Spannungsausgleich zwischen Energiespeichermodulen mit ungleichem Ladungs-und/oder Spannungszustand herbeigeführt werden. Allerdings sind solche *Balancing*-Systeme nicht kostengünstig umzusetzen, da der damit verbundene Hard- und Softwareaufwand erheblich ist.

In einer bevorzugten Ausführungsform des erfindungsgemäßen modularen Batteriespeichersystems bzw. in einer bevorzugten Ausgestaltung des erfindungsgenmäßen Verfahrens können ungleiche Ladungs- und/oder Spannungszustände durch die Berücksichtigung von Leistungsparametern bei der Ansteuerung der einzelnen Energiespeichermodule ausgeglichen werden.

Bei dem Leistungswert bzw. dem Leistungsparameter handelt es sich um einen Zustandswert, der charakteristisch für die Leistungsfähigkeit eines Energiespeichermoduls ist. Insbesondere kann es sich dabei um den aktuellen SOC oder den aktuellen SOH des jeweiligen Energiespeichermoduls zum Zeitpunkt der Ermittlung handeln. Es kann sich bei dem mindestens einen Leistungswert aber auch um einen Wert handeln, der mit dem aktuellen SOC und/oder dem aktuellen SOH des jeweiligen Energiespeichermoduls korreliert.

Zur Bestimmung des SOC existieren mehrere bekannte Vorgehensweisen. Beispielsweise kann bei

Messung einer Entladespannung mit Hilfe bekannter Entladekurven auf den aktuellen SOC-Wert geschlossen werden. Im Rahmen der vorliegenden Erfindung ist die gewählte Methode zur SOC-Bestimmung jedoch sekundär. Wichtig ist lediglich, dass die ermittelten Leistungswerte miteinander vergleichbar sind, also auf vergleichbare Weise gewonnen werden, so dass anhand der Werte die Leistungsfähigkeit der Energiespeichermodule verglichen werden kann.

Auch zur Bestimmung des SOH existieren mehrere bekannte Vorgehensweisen. Charakteristisch für den SOH eines Energiespeichermoduls ist beispielsweise sein Innenwiderstand. Beispielsweise lässt sich bei Inbetriebnahme eines Energiespeichermoduls bei definierten Bedingungen (Temperatur, Ladezustand, Entladestrom, Entladedaueretc.) ein Referenzwert für den Innenwiderstand bestimmen. Anhand der Änderung des Innenwiderstands (gemessen unter den gleichen definierten Bedingungen) lässt sich auf den SOH schließen. Im Rahmen der vorliegenden Erfindung ist allerdings auch die gegebenenfalls gewählte Methode zur SOC-Bestimmung sekundär. Wichtig ist auch hier lediglich, dass die ermittelten Leistungswerte für die Energiespeichermodule des Batteriespeichersystems miteinander vergleichbar sind, also auf vergleichbare Weise gewonnen werden, so dass die Leistungsfähigkeit der Energiespeichermodule anhand der gewonnenen Werte untereinander verglichen werden kann.

In aller Regel ändert sich der SOH eines Energiespeichermoduls-abgesehen von Formierungszyklen bei Inbetriebnahme - zwischen unmittelbar aufeinanderfolgenden Lade- und Entladezyklen nicht signifikant. Wenn es sich bei dem mindestens einen Leistungswert um den aktuellen SOH handelt oder aber um einen Wert, der mit dem aktuellen SOH korreliert, so ist es daher in der Regel ausreichend, den Leistungswert nur in Intervallen, beispielsweise in Abständen von 10 Lade- und Entladezyklen, zu bestimmen. Der bestimmte Wert kann dann gespeichert werden und bis zu seiner Aktualisierung bei der Zuordnung der mindestens zwei Energiespeichermodule zu den unterschiedlich langen Aktivierungszeiträumen herangezogen werden.

Hingegen ist es in der Regel zweckmäßig, den aktuellen SOC oder aber um einen Wert, der mit dem aktuellen SOH korreliert, unmittelbar vor der Zuordnung zu bestimmen, da sich der SOC sehr kurzfristig in signifikantem Ausmaß ändern kann.

In bevorzugten Ausführungsformen weist das erfindungsgemäße Verfahren mindestens einen der folgenden zusätzlichen Schritte, besonders bevorzugt alle drei folgenden zusätzlichen Schritte, auf:
- In einem Datenspeicher werden die ermittelten Leistungswerte für jedes der *n* Energiespeichermodule abgelegt, so dass eine Sortierung der n Energiespeichermodule nach ihrer Leistungsfähigkeit möglich ist.
- Die Zuordnung der Energiespeichermodule zu den unterschiedlich langen Aktivierungszeiträumen erfolgt anhand der in dem Datenspeicher abgelegten Leistungswerte.
- Energiespeichermodulen mit vergleichsweise hoher Leistungsfähigkeit werden längere Aktivierungszeiträume zugeordnet als Energiespeichermodulen mit vergleichsweise geringer Leistungsfähigkeit.

In der Regel korrelieren die Aktivierungszeiträume zu den ermittelten Leistungsfähigkeiten der einzelnen Module. Wenn es sich beispielsweise bei dem mindestens einen Leistungswert um den aktuellen SOH handelt, so lassen sich die Energiespeichermodule nach steigendem SOH sortieren. Der größte SOH-Wert kennzeichnet dann die größte Leistungsfähigkeit, der kleinste SOH-Wert die geringste Leistungsfähigkeit. Erfindungsgemäß ist es bevorzugt, dass dem Energiespeichermodul mit dem größten SOH der längste Aktivierungszeitraum zugeordnet wird, dem Energiespeichermodul mit dem kleinsten SOH hingegen der kürzeste Aktivierungszeitraum.

Dies hat zur Konsequenz, dass leistungsfähigere Energiespeichermodule im Betrieb stärker belastet werden als weniger leistungsfähige. Durch die unterschiedlichen Belastungen werden die Leistungsfähigkeiten der Energiespeichermodule langfristig wieder aneinander angeglichen, da stärker belastete Module im Mittel schneller altern als schwächer belastete. Das erfindungsgemäße Verfahren sorgt damit indirekt für eine Symmetrisierung der Energiespeichermodule und hat damit einen ähnlichen Effekt wie die oben erwähnten *Balancing*-Systeme.

Die größte Kapazitätsvarianz weisen gealterte Energiespeichermodule aus der Elektromobilität auf. Auch solche gealterten Energiespeichermodule können gemäß dem vorliegend beschriebenen Verfahren problemlos gemeinsam in einem Batteriespeichersystem betrieben werden, ohne dass sie vorselektiert werden müssten. Wenn ein Energiespeichermodul sein Lebensende erreicht hat, so kann es durch ein Ersatzmodul ohne weiteres ersetzt werden, ohne dass es dabei aufwendiger, vorbereitender Maßnahmen (*Matching* usw.) bedarf. Auch neuwertige Energiespeichermodule können ungeachtet ihrer Initialkapazität und einer eventuellen Produktionsstreuung ohne vorbereitende Maßnahmen verschaltet und betrieben werden.

Insgesamt verlängert sich mit diesen Maßnahmen die Nutzungsdauer der in einem erfindungsgemäß betriebenen Batteriespeichersystem eingesetzten Energiespeichermodule, was sowohl einen ökologischen als auch ökonomischem Vorteil mit sich bringt.

In besonders bevorzugten Ausführungsformen weist das erfindungsgemäße Verfahren mindestens einen der folgenden zusätzlichen Schritte, besonders bevorzugt alle fünf der im Folgenden erläuterten zusätzlichen Schritte, auf:
- Es wird ermittelt, welche Anzahl *m* an Energiespeichermodulen zur Erzeugung einer Scheitelspannung von *U_{Ges}(t)* benötigt wird.
- Die *m* Energiespeichermodule werden aus den zur Verfügung stehenden *n* Energiespeichermodulen ausgewählt.
- Um einen gewünschten Spannungsverlauf von *U_{Ges}(t)* zu erzeugen, wird festgelegt, in welchen zeitlichen Abständen und über welchen Aktivierungszeitraum die *m* Energiespeichermodule zu aktivieren sind.
- Die ausgewählten *m* Energiespeichermodule werden unter Berücksichtigung der Sortierkriterien "Leistungsfähigkeit" und "Länge der ihnen zugeordneten Aktivierungszeiträume" in eine Reihenfolge überführt, in der die beiden Sortierkriterien in gleicher Richtung entweder beide ansteigen oder beide abfallen.
   Die *m* Energiespeichermodule sind nach ihrer Leistungsfähigkeit sortierbar, die Aktivierungszeiträume nach ihrer Länge. Die Aktivierungszeiträume werden den *m* Energiespeichermodulen zugeordnet. Die Zuordnung erfolgt dabei derart, dass nach der Zuordnung eine Sortierung der Energiespeichermodule nach ihrer Leistungsfähigkeit und nach der Länge der ihnen zugeordneten Aktivierungszeiträume zum gleichen Ergebnis führt. Bei einer Sortierung nach steigender Leistungsfähigkeit ergibt sich also eine Reihenfolge, in der dem leistungsfähigsten Modul der längste Aktivierungszeitraum zugeordnet ist, dem zweitleistungsfähigsten der zweitlängste Aktivierungszeitraum, dem drittleistungsfähigsten der drittlängste Aktivierungszeitraum etc..
- Die *m* Energiespeichermodule werden in dieser Reihenfolge und in den festgelegten zeitlichen Abständen aktiviert.

Bei der Scheitelspannung handelt es sich um den größten Betrag des Augenblickswerts einer sich periodisch ändernden Spannung. Bei sinusförmigem Spannungsverlauf entspricht die Scheitelspannung der Amplitude der Sinusschwingung.

Die Ermittlung von *m* erfolgt im einfachsten Fall (wenn alle Energiespeichermodule des modularen Batteriespeichersystems die gleiche Einzelspannung *U_{Einzel}* aufweisen), indem der Wert der Scheitelspannung durch den Wert der Einzelspannung *U_{Einzel},* die ein einzelnes Energiespeichermodul liefert, dividiert wird.

In besonders bevorzugten Ausführungsformen umfasst das modulare Batteriespeichersystem mehr Energiespeichermodule als zur Erzeugung der Scheitelspannung benötigt werden. In Kurzfassung, es gilt bevorzugt *n > m.* Die Auswahl der *m* Energiespeichermodule kann beispielsweise anhand der verfügbaren Daten zur Leistungsfähigkeit der Module erfolgen. Es können beispielsweise immer die *m* leitungsfähigsten Module ausgewählt werden.

Mit besonderem Vorteil kann es auch vorgesehen sein, dass defekte Energiespeichermodule bei der Auswahl nicht berücksichtigt werden. Hierzu kann beispielsweise für jedes der *n* Energiespeichermodule ein Leistungsschwellwert definiert werden, bei dessen Unterschreiten ein Energiespeichermodul deaktiviert wird.

Gegebenenfalls kann vorgesehen sein, dass die Deaktivierung in Folge des Unterschreitens ein Signal oder eine Mitteilung auslöst, das auf die Deaktivierung und/oder auf die Notwendigkeit eines Austauschs hinweist. Das defekte Energiespeichermodul kann grundsätzlich im laufenden Betrieb getauscht werden. Das erfindungsgemäße Verfahren muss hierfür nicht gestoppt werden. Zu diesem Zweck weisen die den Energiespeichermodulen zugeordneten Schalter die oben erwähnte Möglichkeit zur Überbrückung auf, bei der die Energiespeichermodule nicht mehr elektrisch mit weiteren Energiespeichermodulen verbunden sind.

In weiteren besonders bevorzugten Ausführungsformen weist das erfindungsgemäße Verfahren mindestens eines der folgenden zusätzlichen Merkmale und/oder einen der folgenden zusätzlichen Schritte auf:
- Der gewünschte Spannungsverlauf ist sinusförmig.
- Das Energiespeichermodul mit der höchsten Leistungsfähigkeit wird zuerst aktiviert und das mit der geringsten Leistungsfähigkeit zuletzt.
- Das Energiespeichermodul mit der höchsten Leistungsfähigkeit wird über den längsten Aktivierungszeitraum aktiviert und das Energiespeichermodul mit der geringsten Leistungsfähigkeit über den kürzesten Aktivierungszeitraum.

Zur Erzeugung einer Sinus-Halbwelle ist es zweckmäßig, dass das Energiespeichermodul, dem der längste Aktivierungszeitraum zugeordnet wurde, als erstes aktiviert und als letztes deaktiviert wird. Hingegen sollte das Energiespeichermodul, dem der kürzeste Aktivierungszeitraum zugeordnet wurde, als letztes aktiviert und als erstes deaktiviert werden. Dementsprechend weist das Energiespeichermodul, dem der längste Aktivierungszeitraum zugeordnet wurde, eine vergleichsweise hohe Leistungsfähigkeit auf. Das Energiespeichermodul, dem der kürzeste Aktivierungszeitraum zugeordnet wurde, kann hingegen eine vergleichsweise niedrige Leistungsfähigkeit aufweisen.

In weiteren besonders bevorzugten Ausführungsformen weist das erfindungsgemäße Batteriespeichersystem mindestens eines der folgenden zusätzlichen Merkmale auf:
- Die Gruppe aus den *n* Energiespeichermodulen umfasst ausschließlich Energiespeichermodule vom Lithium-Ionen-Typ.
- Die Gruppe aus den *n* Energiespeichermodulen umfasst ausschließlich Energiespeichermodule vom Typ Nickel-Metallhydrid.
- Die Gruppe aus den *n* Energiespeichermodulen umfasst verschiedene Typen von Energiespeichermodulen.
- Die Gruppe aus den *n* Energiespeichermodulen umfasst mindestens ein Energiespeichermodul mit einer Kathode auf Basis von LFP (Lithium-Eisenphosphat).
- Die Gruppe aus den *n* Energiespeichermodulen umfasst mindestens ein Energiespeichermodul mit einer Kathode auf Basis von NMC (Lithium-Nickel-Mangan-Kobalt-Oxid).
- Die Gruppe aus den *n* Energiespeichermodulen umfasst mindestens ein Energiespeichermodul mit einer Kathode auf Basis von LTO (Lithium-Titanat).
- Die Gruppe aus den *n* Energiespeichermodulen umfasst mindestens ein Energiespeichermodul mit einer Kathode auf Basis von NCA (Lithium-Nickel-Kobalt-Aluminium-Oxid).
- Die Gruppe aus den *n* Energiespeichermodulen umfasst mindestens ein Energiespeichermodul vom Typ Pb/PbO₂.

In dem erfindungsgemäßen modularen Batteriespeichersystem können ohne weiteres auch Energiespeichermodule unterschiedlichen Typs miteinander verschaltet werden. Hierbei können die Stärken einzelner Typen gezielt genutzt werden. Unterschiedliche Energiespeichermodule können je nach Anforderung angesteuert werden. Beispielsweise eignen sich Energiespeichermodule mit einer Kathode auf Basis von LTO zum Auffangen hoher Lastspitzen.

Grundsätzlich ist es sogar möglich, Energiespeichermodule vom Typ Nickel-Metallhydrid und Energiespeichermodule vom Lithium-Ionen-Typ in einem Batteriespeichersystem miteinander zu verschalten.

Energiespeichermodule vom Typ Pb/PbO₂ finden mit einem Schwefelsäure-Elektrolyten klassisch als Einzelzellen eines Bleiakkumulators Verwendung. Im Rahmen der vorliegenden Erfindung kann es besonders bevorzugt sein, das mindestens eine Energiespeichermodul vom Typ Pb /PbO₂ mit Energiespeichermodulen vom Lithium-Ionen-Typ in einem Batteriespeichersystem miteinander zu verschalten. Energiespeichermodule vom Typ Pb/PbO₂ eignen sich besonders gut zur Verwendung in Scheitelspitzen.

In Übereinstimmung mit diesen Ausführungen weist das erfindungsgemäße Batteriespeichersystem bzw. das erfindungsgemäße Verfahren mindestens eines der folgenden Merkmale auf:
- Die Energiespeichermodule unterschiedlichen Typs weisen bevorzugt unterschiedliche Einzelspannungen *U_{Einzel}* auf.
   Die Gruppe aus *n* Energiespeichermodulen kann also beispielsweise Energiespeichermodule mit einer Nennspannung von 1,2 V (wie sie z.B. ein Energiespeichermodul vom Typ Nickel-Metallhydrid in der Regel aufweist) kombiniert mit Energiespeichermodulen mit einer Nennspannung von 2 V (z.B. ein Energiespeichermodul vom Typ Pb/PbO₂) umfassen.
- Die Energiespeichermodule unterschiedlichen Typs umfassen bevorzugt ein Energiespeichermodul aus der Gruppe mit Energiespeichermodulen vom Lithium-Ionen-Typ, Energiespeichermodulen vom Typ Nickel-Metallhydrid und Energiespeichermodulen vom Typ Pb/PbO₂.
- Die Energiespeichermodule unterschiedlichen Typs umfassen bevorzugt mindestenszwei Energiespeichermodule aus der Gruppe mit Energiespeichermodulen vom Lithium-Ionen-Typ, Energiespeichermodulen vom Typ Nickel-Metallhydrid und Energiespeichermodulen vom Typ Pb/PbO₂.
   Die Gruppe aus *n* Energiespeichermodulen umfasst also beispielsweise mindestens ein Energiespeichermodul vom Typ Nickel-Metallhydrid mit einer Nennspannung von 1,2 V kombiniert mit mindestens einem Energiespeichermodul vom Typ Pb/PbO₂ mit einer Nennspannung von 2 V oder kombiniert mit mindestens einem Energiespeichermodul vom Lithium-Ionen-Typ. Alternativ kann die Gruppe aus *n* Energiespeichermodulen auch mindestens ein Energiespeichermodul von jedem der drei genannten Typen aufweisen oder aber mindestens ein Energiespeichermodul vom Typ Pb/PbO₂ kombiniert mit mindestens einem Energiespeichermodul vom Lithium-Ionen-Typ.
- Die Energiespeichermodule unterschiedlichen Typs umfassen mindestens ein Energiespeichermodul aus der Gruppe mit Energiespeichermodulen mit einer Kathode auf Basis von LFP, Energiespeichermodulen mit einer Kathode auf Basis von NMC, Energiespeichermodulen mit einer Kathode auf Basis von LTO und Energiespeichermodulen mit einer Kathode auf Basis von NCA.

In besonders bevorzugten Ausführungsformen wird das erfindungsgemäße Batteriespeichersystem mit einem Batteriemanagementsystem betrieben, wobei auf der Basis von messbaren Parametern der Energiespeicherzellen bzw. Energiespeichermodule die einzelnen Module gezielt angesteuert werden.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

- Fig.1: Verlauf der Gesamtspannung eines modularen Batteriespeichersystems;
- Fig. 2: modulares Batteriespeichersystem aus dem Stand der Technik;
- Fig. 3: modulares Batteriespeichersystem in einer bevorzugten Ausführungsform der Erfindung; und
- Fig. 4: leistungselektronische Struktur der Modulationseinheit als Bestandteil eines modularen Batteriespeichersystems gemäß der Erfindung.

### DETAILLIERTE BESCHREIBUNG DER AUSFÜHRUNGSBEISPIELE

Die grundsätzliche Funktionsweise eines modularen Batteriespeichersystems ist beispielsweise in der WO 2018/162122 A1 im Detail beschrieben, worauf hiermit Bezug genommen wird.

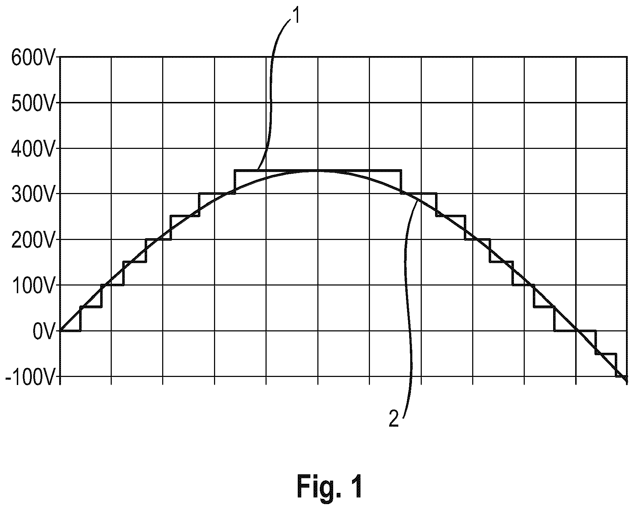

**Fig. 1** illustriert das Prinzip der Angleichung bzw. "Verschleifung" einer mit einem modularen Batteriespeichersystem erzeugbaren Treppenspannung 1 in eine sinuskurvenförmige Spannung 2, die insbesondere zur Einspeisung in ein Wechselstromnetz genutzt werden kann. Die Treppenspannung wird dabei so erzeugt, dass einzelne Energiespeichermodule eines modularen Batteriespeichersystems sukzessive zu- und abgeschaltet werden, woraus sich eine Gesamtspannung in treppenförmiger Abstufung ergibt. Diese Treppenspannung 1 ist einer Sinusspannung in einem Stromnetz angenähert. Über das Schalten der Energiespeichermodule ist jedoch nur eine grobe Annäherung an die gewünschte Ausgangsspannung möglich. Es ist daher bereits bekannt, eine Pulsweitenmodulation (PWM) zur Angleichung der Treppenspannung 1 an die gewünschten sinuskurvenförmige Spannung 2 durchzuführen, mit der die Spannungsstufen abgefedert bzw. ausgeglichen werden.

Die Treppenspannung 1 ist lediglich ein Beispiel für die Möglichkeiten eines modularen Batteriespeichersystems. Tatsächlich lassen sich mit einer Schaltung der einzelnen Energiespeichermodule eines modularen Batteriespeichersystems prinzipiell beliebige Kurvenformen generieren.

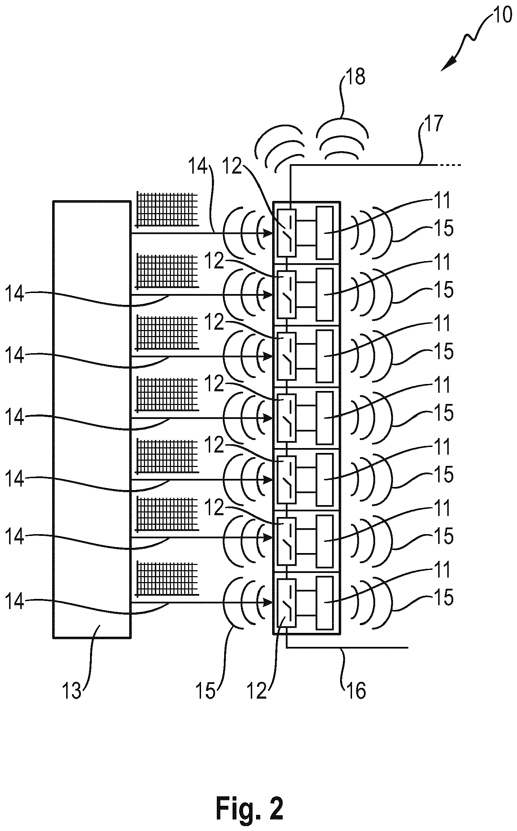

**Fig. 2** illustriert ein herkömmliches modulares Batteriespeichersystem mit einer Mehrzahl einzelner Energiespeichermodule 11, denen jeweils ein Schalter 12 zugeordnet ist. Bei den Energiespeichermodulen 11 handelt es sich um wiederaufladbare Energiespeichermodule. Jedem der Schalter 12 ist genau ein Energiespeichermodul 11 zugeordnet und umgekehrt. Mittels der Schalter 12 können die jeweiligen Energiespeichermodule 11 aktiviert und deaktiviert werden.

Jeder der Schalter 12 kann mehrere Schaltstellungen aufweisen. In einer ersten Schaltstellung ist das dem Schalter 12 zugeordnete Energiespeichermodul 11 aktiviert und seine Einzelspannung *U_{Ein-zel}* steht zur Verfügung. In einer zweiten Schaltstellung ist das dem Schalter 12 zugeordnete Energiespeichermodul 11 deaktiviert und seine Einzelspannung *U_{Einzel}* steht nicht zur Verfügung. Gegebenenfalls kann eine dritte Schaltstellung vorgesehen sein, in der das dem Schalter 12 zugeordnete Energiespeichermodul 11 mit umgekehrter Polarität aktiviert ist.

Alle Schalter 12 sind vorteilhafterweise dazu ausgebildet, die jeweils zu ihnen gehörigen Energiespeichermodule 11 im Deaktivierungsfall überbrücken zu können. So können deaktivierte Energiespeichermodule 11 beispielsweise im laufenden Betrieb ausgetauscht werden.

Die Schalter 12 sind in Serie geschaltet. Über die Schalter 12 können die Energiespeichermodule 11 damit derart verschaltet werden, dass sich die Einzelspannungen *U_{Einzel}* von aktivierten Energiespeichermodulen 11 zu einer Gesamtspannung *U_{Gesamt}* addieren. Befindet sich einer der Schalter 12 in der zweiten Schaltstellung, so überbrückt er das ihm zugeordnete deaktivierte Energiespeichermodul 11. Befindet sich einer der Schalter 12 in der dritten Schaltstellung, so leistet die Einzelspannung *U_{Einzel}* des ihm zugeordneten Energiespeichermoduls 11 einen negativen Beitrag zur Gesamtspannung *U_{Gesamt}.* Durch eine entsprechende Ansteuerung der einzelnen Schalter 12 über die Steuereinrichtung 13 kann damit insbesondere eine Treppenspannung aus der Addition der Einzelspannungen erzeugt werden, die einem sinuskurvenförmigen Verlauf der Spannung angenähert ist. Beim sukzessiven Zuschalten der Energiespeichermodule 11 erhöht sich die Gesamtspannung *U_{Gesamt}* stufenweise, bis der gewünschte Scheitelwert erreicht ist. Danach wird die Gesamtspannung durch sukzessive Deaktivierung der einzelnen Energiespeichermodule stufenweise abgesenkt.

Um eine ausreichende Annäherung an die Sinuskurve eines Wechselstroms zu bewerkstelligen, wird herkömmlicherweise bei den einzelnen Energiespeichermodulen 11 die generierte Einzelspannung einer PWM über den jeweils zugeordneten Schalter 12 unterzogen, bevor die modulierten Einzelspannungen addiert werden. Das modulare Batteriespeichersystem 10 weist einen Neutralleiter 16 und einen Ausgang 17 auf, wobei über den Ausgangsleiter 17 die Gesamtspannung, die insbesondere einer sinuskurvenförmigen Spannung angenähert ist, in eine Netzspannung eingespeist werden kann.

Für die PWM ist eine hohe Taktfrequenz erforderlich, so dass durch die entsprechend hochfrequente Ansteuerung 14 der einzelnen Schalter 12 es zur Ausbildung von elektromagnetischer Störausstrahlung 15 im Bereich der einzelnen Energiespeichermodule 11 und auch im Bereich der Leitungen zur Ansteuerung 14 der Schalter 12 kommt. Die schnellen Schaltvorgänge an den Schaltern 12 verursachen bei hohen Strömen starke magnetische Wechselfelder, die dazu führen können, dass das modulare Batteriespeichersystem in der Praxis kaum einsetzbar ist. Der Aufbau des modularen Batteriespeichersystems 10 stört dabei nicht nur seinen eigenen Betrieb durch die elektromagnetischen Störausstrahlungen, sondern kann auch beträchtliche Störungen nach außen abstrahlen und in benachbarte Leiter magnetisch einkoppeln. Dies macht eine aufwendige Abschirmung gegenüber elektromagnetischer Störausstrahlung im gesamten Bereich des modularen Batteriespeichersystems 10 erforderlich. Auch der Ausgangsleiter 17 verursacht elektromagnetische Störausstrahlungen 18, die abgeschirmt werden sollten.

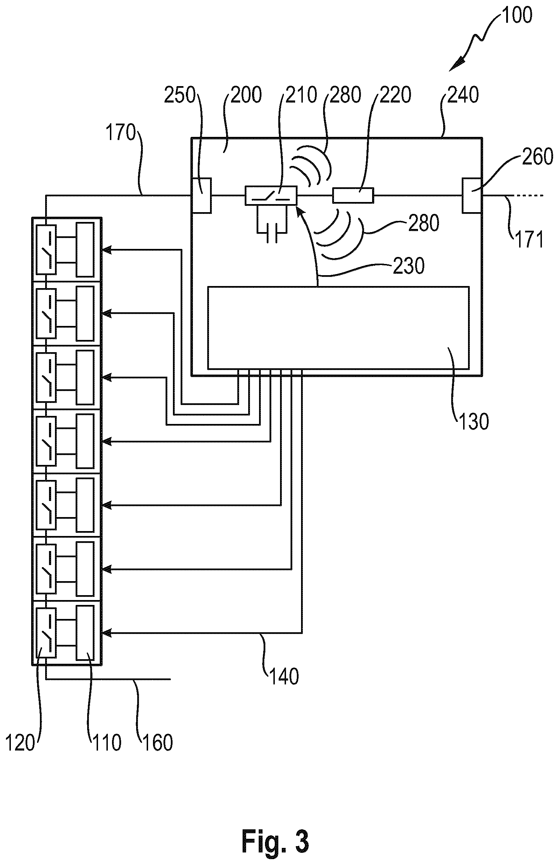

**Fig. 3** illustriert ein modulares Batteriespeichersystem 100 gemäß der Erfindung. Auch hier ist eine Mehrzahl von Energiespeichermodulen 110 vorgesehen, denen jeweils ein Schalter 120 zugeordnet ist. Der in Fig. 3 angedeutete Neutralleiter 160 ist nicht zwingend erforderlich. So kann das System auch als reines Dreiphasensystem aufgebaut sein. Anders als bei dem herkömmlichen Batteriespeichersystem, das anhand der Fig. 2 erläutert wurde, ist hier jeweils eine vergleichsweise einfache Schaltung 120 vorgesehen, die vor allem eine An- und Abschaltung der einzelnen Energiespeichermodule 110 erlaubt und die mit einer niedrigen Frequenz angesteuert wird. Die entsprechende Ansteuerung 140 über die Steuereinrichtung 130 ist daher langsam und kann beispielsweise eine Frequenz von 100 Hz aufweisen, die dem Takt von Netz-Halbwellen entspricht. Beispielsweise sind hierbei einfache 0/1-Signalleitungen ausreichend. Ein Datenbus ist nicht erforderlich oder es kann ein sehr einfach ausgestalteter Kommunikationsbus vorgesehen sein. Insbesondere sind keine echtzeitfähigen Leitungen erforderlich. Durch die einfachen Schalter 120 und die einfachen Signalleitungen 140 kommt es in dem Bereich der einzelnen Energiespeichermodule 110 nicht zu einer relevanten Abstrahlung von elektromagnetischer Störausstrahlung, so dass in diesem Bereich auf aufwendige Abschirmmaßnahmen verzichtet werden kann.

Die Einzelspannungen *U_{Einzel},* die in den einzelnen zugeschalteten bzw. aktivierten Energiespeichermodulen 110 generiert werden, werden zu einer Gesamtspannung *U_{Gesamt}* addiert und über den Ausgangsleiter 170 in eine zentrale Modulationseinheit 200 eingespeist. Kernstück der Modulationseinheit 200 ist ein Pulsweitenmodulationsschalter 210, der die für eine Feineinstellung der Gesamtspannung *U_{Gesamt}* erforderliche Pulsweitenmodulation des Spannungsverlaufs vornimmt. Dem Pulsweitenmodulationsschalter 210 nachgeschaltet ist eine Filterdrossel 220, die für eine weitere Glättung der durch die Pulsweitenmodulation gewissermaßen zerhackten Gesamtspannung sorgt.

Die Taktfrequenz für die Pulsweitenmodulation, die durch eine direkte Kontrolle über eine Ansteuerleitung 230 der Steuereinrichtung 130 erfolgt, wird verhältnismäßig hoch gewählt, da dann die Filterdrossel 220 besonders wirksam ist und demgemäß verhältnismäßig klein ausgelegt werden kann. Da die Filterdrossel 220 im Allgemeinen das teuerste Bauteil des gesamten Batteriespeichersystems 100 ist, bietet diese Maßnahme erhebliches Einsparungspotenzial.

Die im Zusammenhang mit der hochfrequenten Pulsweitenmodulationen entstehenden elektromagnetischen Störausstrahlungen 280 werden effektiv durch ein Gehäuse 240 der Modulationseinheit 200 abgeschirmt, wobei das Gehäuse 240 bzw. die Modulationseinheit 200 mit besonderem Vorteil besonders kompakt und robust ausgebildet ist.

In besonders bevorzugten Ausführungsformen kann am Eingang und am Ausgang der Modulationseinheit 200 jeweils ein Tiefpassfilter 250, 260 vorgesehen sein, um die Gesamtspannung *U_{Gesamt}* weiter zu glätten.

Die resultierende Gesamtspannung *U_{Gesamt}* 171 nach dem Durchlaufen der Modulationseinheit 200 ist in besonderer Weise geeignet, beispielsweise als eine von beispielsweise drei Phasen in ein Wechselstromnetz eingespeist zu werden.

Die Steuereinrichtung 130 ist vorzugsweise integraler Bestandteil der Modulationseinheit 200, da hiermit in besonders geeigneter Weise ein Schutz und eine Abschirmung nach außen auch für die Steuereinrichtung 130 erreicht wird.

Der Pulsweitenmodulationsschalter 210 kann direkt durch die Steuereinrichtung 130 über die Ansteuerung 230 kontrolliert werden, wobei nicht zwingend ein schneller Datenbus für die Ansteuerung 230 erforderlich ist.

Die durch den hochfrequent angesteuerten Pulsweitenmodulationsschalter 210 verursachte elektromagnetische Störausstrahlung 280 wird zuverlässig durch das Gehäuse 240 abgeschirmt. Die auf der einen Seite kompakte und konzentrierte Konstruktion der Modulationseinheit 200, die auch die Filterdrossel 220 integriert, erlaubt hohe Schaltfrequenzen und erlaubt somit eine Reduktion der Größe und der Kosten der einzelnen Komponenten. Auf der anderen Seite kann bei dem erfindungsgemäßen Batteriespeichersystem 100 die raumgreifende Struktur, die von den einzelnen Energiespeichermodulen 110 gebildet wird, ohne weitere Maßnahmen zur Abschirmung ausgebildet werden, wodurch weiterhin Kosten reduziert werden und die Gehäusekonstruktion im gewissermaßen peripheren Bereich des Batteriespeichersystems vereinfacht wird.

Die Modulationseinheit 200 umfasst in bevorzugten Ausführungsformen eine hier nicht näher illustrierte Kühleinrichtung.

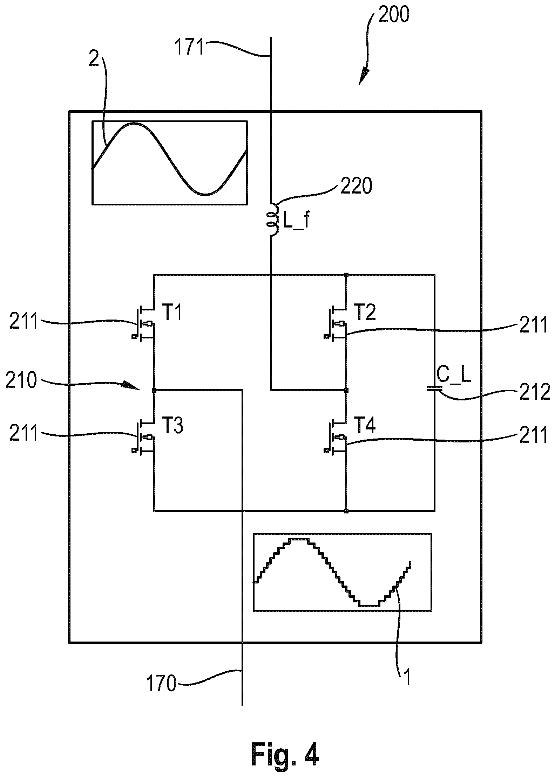

**Fig. 4** illustriert die leistungselektronische Grundstruktur der Modulationseinheit 200. Der Pulsweitenmodulationsschalter 210 umfasst eine H-Brückenschaltung mit zwei Leitungszweigen mit jeweils zwei Halbleiterschaltern (T1, T2 und T3, T4), die über einen Kondensator (212) miteinander verbunden sind (C_L). In den Eingang der Schalterstruktur wird die Gesamtspannung *U_{Gesamt}* aus den hier nicht gezeigten Energiespeichermodulen über deren Ausgangsleiter 170 eingespeist. Die Gesamtspannung *U_{Gesamt}* weist in diesem Beispiel die Form einer Treppenspannung 1 auf.

Die Spannung über dem Kondensator 212 wird über die Ansteuerung der Leistungshalbleiter 211, insbesondere per Pulsweitenmodulation, eingestellt bzw. geregelt. Nach dem Durchlaufen der Schaltung 210 und dem Durchlaufen der nachgeschalteten Filterdrossel 220 (L_f) resultiert ein geglätteter sinuskurvenförmiger Spannungsverlauf 2, der beispielsweise als eine der drei Netzphasen in eine Netzspannung eingespeist werden kann. Eine derartige Sinusform der resultierenden Spannung ist jedoch nur ein mögliches Beispiel für die mit dem erfindungsgemäßen modularen Batteriespeichersystem generierbare Spannung. Gleichfalls können auch andere Kurvenformen oder ein Gleichstrom generiert werden.

## Patentansprüche

1. Modulares Batteriespeichersystem (100) mit einer Gruppe aus *n* wiederaufladbaren Energiespeichermodulen (110), wobei das modulare Batteriespeichersystem die folgenden Merkmale aufweist:
a. Die Energiespeichermodule (110) umfassen jeweils mindestens ein, vorzugsweise mehrere wiederaufladbare Energiespeicherelemente, und
b. jedem einzelnen der *n* Energiespeichermodule (110) ist ein Schalter (120) zugeordnet, über den das jeweilige Energiespeichermodul (110) aktiviert und deaktiviert werden kann, und
c. die *n* Energiespeichermodule (110) sind über die Schalter (120) derart miteinander verschaltbar, dass sich die Einzelspannungen *U_{Einzel}* von aktivierten Energiespeichermodulen zu einer Gesamtspannung *U_{Gesamt}* addieren können, und
d. das Batteriespeichersystem (100) umfasst eine Steuereinrichtung (130) zur Ansteuerung der den *n* Energiespeichermodulen (110) zugeordneten Schalter (120),
**dadurch gekennzeichnet, dass**
e. das Batteriespeichersystem (100) eine Modulationseinheit (200) mit den folgenden Merkmalen umfasst:
i. Die Modulationseinheit (200) ist derart mit den verschaltbaren *n* Energiespeichermodulen (110) verbunden, dass sie die Gesamtspannung *U_{Gesamt}* zu modulieren vermag,
ii. die Modulationseinheit (200) umfasst einen Pulsweitenmodulationsschalter (210), und
iii. die Modulationseinheit (200) umfasst ein Gehäuse (240), das den Pulsweitenmodulationsschalter (210) umschließt und das dazu ausgebildet ist, elektronische Komponenten außerhalb des Gehäuses gegen von dem Pulsweitenmodulationsschalter (210) ausgehende elektromagnetische Störausstrahlung (280) abzuschirmen.

2. Modulares Batteriespeichersystem nach Anspruch 1 mit mindestens einem der folgenden zusätzlichen Merkmale:
a. Der Pulsweitenmodulationsschalter (210) umfasst eine Mehrzahl von Halbleiterschaltern (211).
b. Der Pulsweitenmodulationsschalter (210) umfasst eine H-Brückenschaltung mit vier Halbleiterschaltern (211).
c. Die H-Brückenschaltung umfasst zwei Leitungszweige mit jeweils zwei Halbleiterschaltern (T1, T2 und T3, T4), die über einen Kondensator (212) miteinander verbunden sind.

3. Modulares Batteriespeichersystem nach Anspruch 1 oder nach Anspruch 2 mit mindestens einem der folgenden zusätzlichen Merkmale:
a. Die Modulationseinheit (200) umfasst eine Filterdrossel (220), die in Entladerichtung dem Pulsweitenmodulationsschalter (210) nachgeschaltet ist.
b. Das Gehäuse (240) umfasst auch die Filterdrossel (220).

4. Modulares Batteriespeichersystem nach einem der Ansprüche 1 bis 3 mit mindestens einem der folgenden zusätzlichen Merkmale:
a. Die Modulationseinheit (200) umfasst einen Tiefpassfilter (250), der in Entladerichtung dem Pulsweitenmodulationsschalter (210) vorgeschaltet ist.
b. Die Modulationseinheit (200) umfasst einen Tiefpassfilter (260), der in Entladerichtung dem Pulsweitenmodulationsschalter (210) nachgeschaltet ist.
c. Das Gehäuse (240) umfasst auch das Tiefpassfilter (250) und/oder das Tiefpassfilter (260).

5. Modulares Batteriespeichersystem nach einem der vorhergehenden Ansprüche 1 mit dem folgenden zusätzlichen Merkmal:
a. Das Gehäuse besteht aus Metall und/oder einem metallisierten Kunststoff.

6. Modulares Batteriespeichersystem nach einem der vorhergehenden Ansprüche mit einem der folgenden zusätzlichen Merkmale:
a. Die Modulationseinheit (200) umfasst eine Kühleinrichtung.
b. Der Modulationseinheit (200) ist eine Kühleinrichtung zugeordnet.

7. Modulares Batteriespeichersystem nach einem der vorhergehenden Ansprüche mit mindestens einem der folgenden zusätzlichen Merkmale:
a. Die Schalter (120), die den *n* Energiespeichermodulen (110) zugeordnet sind, sind nicht zur Pulsweitenmodulation eingerichtet.
b. Die *n* Energiespeichermodule (110) weisen keine oder lediglich eine passive Kühleinrichtung auf oder den *n* Energiespeichermodulen (110) ist keine oder lediglich eine passive Kühleinrichtung zugeordnet.

8. Modulares Batteriespeichersystem nach einem der vorhergehenden Ansprüche mit dem folgenden zusätzlichen Merkmal:
a. Zur Ansteuerung der den *n* Energiespeichermodulen (110) zugeordneten Schalter (120) sind 0/1-Signalleitungen (140) vorgesehen.

9. Modulares Batteriespeichersystem nach einem der vorhergehenden Ansprüche mit dem folgenden zusätzlichen Merkmal:
a. Die Steuereinrichtung (130) ist derart eingerichtet, dass sich mindestens zwei der Energiespeichermodule (110) über die jeweils zugeordneten Schalter (120) zeitlich überlappend, aber über unterschiedlich lange Aktivierungszeiträume aktivieren lassen, um eine sich zeitlich ändernde Gesamtspannung *U_{Gesamt}*(t) zu erzeugen.

10. Modulares Batteriespeichersystem nach einem der vorhergehenden Ansprüche mit dem folgenden zusätzlichen Merkmal:
a. Die Steuereinrichtung (130) ist zur Regelung des Pulsweitenmodulationsschalters (210) in der Modulationseinheit (200) eingerichtet.

11. Modulares Batteriespeichersystem nach einem der vorhergehenden Ansprüche mit einem der folgenden zusätzlichen Merkmale:
a. Die Steuereinrichtung (130) ist ein Signalprozessor.
b. Die Steuereinrichtung (130) ist ein Mikrocontroller.

12. Verfahren zum Betreiben eines modularen Batteriespeichersystem (100) nach einem der Ansprüche 1 bis 11, wobei das Verfahren die folgenden Schritte umfasst:
a. Durch sukzessives Aktivieren und Deaktivieren der *n* Energiespeichermodule (110) wird eine Treppenspannung (1) erzeugt, und
b. die Treppenspannung (1) wird in die Modulationseinheit (200) des Batteriespeichersystems (100) geleitet und durch eine Pulsweitenmodulation und mindestens eine Filterung in eine geglättete Sinusspannung (2) überführt.

13. Verfahren nach Anspruch 12 mit dem folgenden zusätzlichen Merkmal:
a. Die geglättete Sinusspannung (2) wird als eine Phase in ein Wechselstromnetz eingespeist.

14. Verfahren nach Anspruch 12 oder Anspruch 13 mit dem folgenden zusätzlichen Merkmal:
a. Die Energiespeichermodule (110) des modularen Batteriespeichersystems (100) werden mit einer Frequenz zwischen 50 und 500 Hz, insbesondere mit 100 Hz, angesteuert.

15. Verfahren nach einem der Ansprüche 12 bis 14 mit dem folgenden zusätzlichen Merkmal:
a. Der Pulsweitenmodulationsschalter (210) der Modulationseinheit (200) wird mit einer hohen Frequenz angesteuert.
